# EUROPEAN PATENT APPLICATION

(11) **EP 2 040 473 A2**
(43) Date of publication of application: **25.03.2009**
(21) Application number: 08164676.2
(22) Date of filing: 19.09.2008
(51) Int. Cl.: H04N 7/173, H04N 5/00

(54) **A host device interfacing with a point of deployment (POD) and a method of processing certificate status information**

(30) Priority: 21.09.2007 KR 20070096534
(71) Applicant: LG Electronics Inc., Seoul 150-721 (KR)
(72) Inventor: Kim, In Moon, LG ELECTRONICS INC. IP GROUP, 137-724, Seoul (KR)
(74) Representative: Cabinet Plasseraud

(57) **Abstract**

A host device interfacing with a point of deployment (POD) and a method of processing certificate status information are disclosed. A communication unit transmits/receives data via a network. A controller collects information associated with a certificate of the host device and information associated with a certificate of the POD, updates certificate status information on the basis of the collected information, and transmits the updated certificate status information via the communication unit when a request for the certificate status information is received via the communication unit.

## Description

This application claims the benefit of Korean Patent Application No. 10-2007-96534, filed on September 21, 2007 which is hereby incorporated by reference as if fully set forth herein.

### BACKGROUND OF THE INVENTION

### Field of the Invention

The present invention relates to a host device and a method of processing certificate status information.

### Discussion of the Related Art

As a data broadcast has appeared, a broadcast system which transmits and receives a broadcast has been changed to an interactive broadcast system. The interactive broadcast system includes the concept that a viewer or a broadcast receiving apparatus can transmit information associated with a broadcast, which will be received, to a broadcast transmitter.

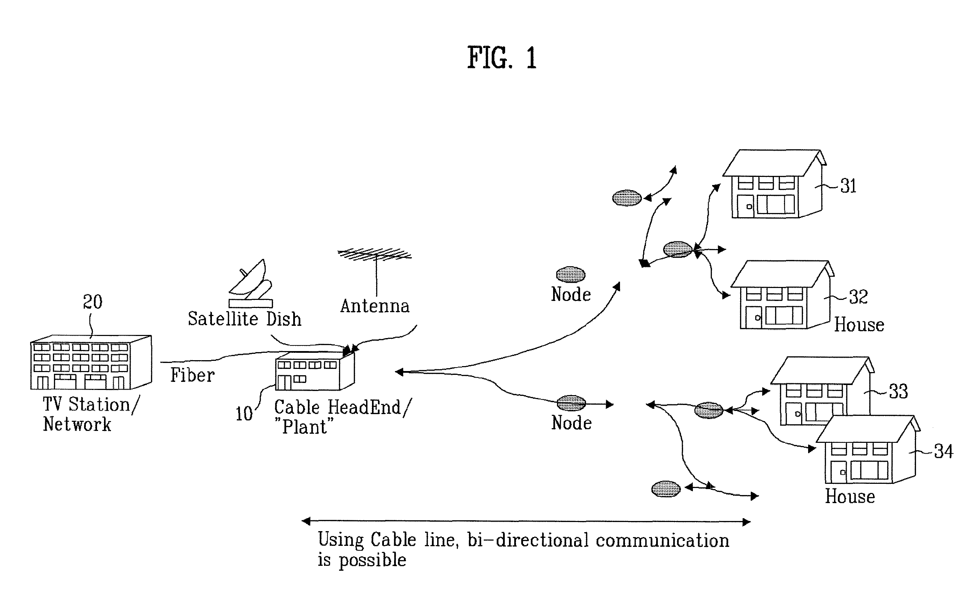

FIG. 1 is a conceptual diagram showing a cable broadcast system including a broadcast host and a cable card as an example of the interactive broadcast system. A cable headend 10 or a plant 10 may receive a broadcast signal from a television broadcast station 20 via various communication networks. The cable headend 10 indicates a broadcast transmitting terminal including a broadcast system connected via a cable. The cable headend 10 may transmit a cable broadcast received via networks including nodes to host devices 31, 32, 33 and 34 of cable broadcast receiving apparatuses. The host devices 31, 32, 33 and 34 or cable cards included in the cable broadcast receiving apparatuses may receive and transmit signals from the cable headend 10 via cable networks.

The host devices 31, 32, 33 and 34 may be connected to other peripherals (e.g., a digital television receiver, a DVD player, a digital camcorder, a set top box and so on) via various interfaces.

As broadcasting contents become digitalized, the protection of the broadcasting contents may become more important. In order to protect the digital broadcast contents, the broadcast receiving apparatus can conditionally access broadcast contents such that an authorized user can view the broadcast contents. For example, the cable broadcast receiving apparatus uses an open cable scheme for separating a Point Of Deployment (POD) module including a Conditional Access (CA) system from a main body. For example, the POD module can be detachably connected to a slot of the main body of the broadcast receiving apparatus using a PCMCIA card. The POD module is called a cable card and the main body in which the cable card is inserted is called a host device. For example, a digital built-in television or a digital ready television corresponds to the host device. Hereinafter, the host device and the cable card are collectively called a cable broadcast receiving apparatus.

### SUMMARY OF THE INVENTION

Accordingly, the present invention is directed to a host device interfacing with a Point Of Deployment (POD) and a method of processing certificate status information that substantially obviate one or more problems due to limitations and disadvantages of the related art.

An object of the present invention is to provide a host device interfacing with a POD for providing certificate status information in certificate between the host device and the POD, and a method of processing certificate status information.

Another object of the present invention is to provide a host device interfacing with a POD for providing certificate status information to a broadcast transmitting terminal when a problem occurs in certificate between the host device and the POD, and a method of processing certificate status information.

Another object of the present invention is to provide a host device interfacing with a POD for providing certificate status information to a broadcast transmitting terminal so as to verify certificate error when a problem occurs in certificate between the host device and the POD, and a method of processing certificate status information.

Another object of the present invention is to provide a host device interfacing with a POD for monitoring certificate status information in certificate between the host device and the POD, and a method of processing certificate status information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a host device interfacing with a point of deployment (POD) includes a communication unit transmitting/receiving data via a network; and a controller collecting information associated with a certificate of the host device and information associated with a certificate of the POD, updating certificate status information on the basis of the collected information, and transmitting the updated certificate status information via the communication unit when a request for the certificate status information is received via the communication unit. The certificate status information may include at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate. The certificate status information may be defined by a management information base (MIB).

The controller may transmit the certificate status information on the basis of a simple network management protocol (SNMP). The controller may include an information management unit collecting the information associated with the certificate of the host device and the information associated with the certificate of the POD and updating the certificate status information on the basis of the collected information, and a SNMP agent receiving the request for the certificate status information via the communication unit and transmitting the certificate status information via the communication unit when the request for the certificate status information is received.

The host device may further include a tuner receiving broadcast data, a demodulator demodulating the received broadcast data, and a multiplexer multiplexing the demodulated broadcast data and outputting the demultiplexed data to the POD.

In another aspect of the present invention, a method of processing certificate status information includes transmitting a request for certificate status information including information associated with certificates of a host device and a point of deployment (POD) via a network; at the host device, receiving the transmitted request for the certificate status information and transmitting the certificate status information according to the received request; and receiving and processing the transmitted certificate status information. The certificate status information may include at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate. The certificate status information may be defined by a management information base (MIB).

The transmitting of the request for the certificate status information may include transmitting the request for the certificate status information on the basis of a simple network management protocol (SNMP).

The processing of the certificate status information may include verifying a certificate error between the host device and the POD on the basis of the received certificate status information.

In another aspect of the present invention, a method of processing certificate status information includes collecting information associated with a certificate of a host device and information associated with a certificate of a point of deployment (POD); updating certificate status information on the basis of the collected information; checking whether or not a request for the certificate status information is received; and transmitting the updated certificate status information when the request for the certificate status information is received. The certificate status information may include at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate.

The certificate status information may be defined by a management information base (MIB).

The transmitting of the certificate status information may include transmitting the certificate status information on the basis of a simple network management protocol (SNMP).

It is to be understood that both the foregoing general description and the following detailed description of the present invention are exemplary and explanatory and are intended to provide further explanation of the invention as claimed.

According to a host device interfacing with a POD and a method of processing certificate status information of the present invention, it is possible to provide the certificate status information in authentication between the host device and the POD.

In addition, when a problem occurs in the authentication between the host device and the POD, the status information can be provided to a broadcast transmitting terminal and the broadcast transmitting terminal can verify a certificate error on the basis of the status information.

In addition, the authentication between the host device and the POD, the certificate status information can be monitored in real time.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptual diagram showing a cable broadcast network including a broadcast host device and a cable card;

FIG. 2 is a view showing the configuration of a system in which a simple network management protocol (SNMP) management server and a SNMP agent are connected via a network;

FIG. 3 is a conceptual diagram showing the transmission/reception of status information of a broadcast receiving apparatus using the SNMP;

FIGs. 4A to 4E are views showing examples of a variety of status information which can be transmitted from a host device to a multi system operator (MSO) using the SNMP;

FIGs. 5A to 5C are conceptual diagrams of communication defined in the SNMP method;

FIG. 6 is a view showing an example of transmitting/receiving certificate information between a Point Of Deployment (POD) including a security module and a host device;

FIG. 7 is a view showing an example of a mutual authentication process between the host device and the POD;

FIG. 8 is a view showing examples of fields included in a certificate;

FIG. 9 is a view showing an exemplary embodiment of certificate status information in the form of a table;

FIG. 10 is a view showing the configuration of a broadcast receiving apparatus according to an exemplary embodiment of the present invention;

FIG. 11 is a flowchart illustrating a method of processing certificate status information according to an exemplary embodiment of the present invention; and

FIG. 12 is a flowchart illustrating a method of processing certificate status information according to another exemplary embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

Hereinafter, a host device interfacing with a Point Of Deployment (POD) and a method of processing certificate status information will be described. In the following embodiment, a multi system operator (MSO) headend may monitor and control certificate information between a host device and the POD using a network management protocol. The host device may transmit the certificate status information which is the status information of the POD and the host device using the network management protocol. The MSO headend includes a cable broadcast station which transmits a cable broadcast, a broadcast transmitting terminal which transmits other broadcast data such as an IP broadcast, and a system operator (SO) headend. The SO indicates a general cable broadcast provider (that is, a local cable TV broadcast provider). The MSO headend may be called a MSO. The POD and the host device interfacing therewith are collectively called a broadcast receiving apparatus.

There are various network management protocols. However, in the following embodiment, for example, a simple network management protocol (SNMP) will be described in order to facilitate the description of the embodiment of the present invention. The SNMP is one of the network-related standards used for previously preventing the overload of network traffic and a failure which may occur on the network due to various causes, efficiently finding the causes of the occurred failure, and performing a restoring operation. The SNMP may be used for performing basic network management and remotely checking the statuses of various devices connected via the network in real time.

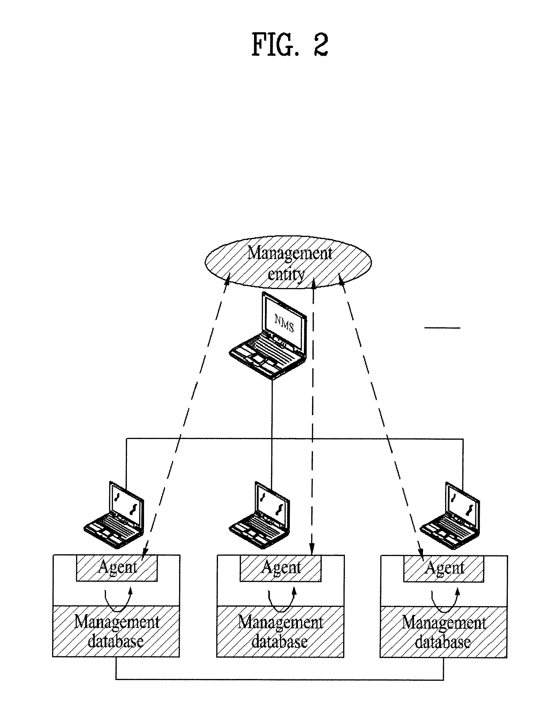

FIG. 2 is a view showing the configuration of a system in which a SNMP management server and a SNMP agent are connected via a network.

Referring to FIG. 2, a network management system may transmit/receive management information to/from broadcast receiving apparatuses according to the network management protocol. The network management protocol may be the SNMP. The host device of each of the broadcast receiving apparatuses includes an agent. The agent collects the information associated with the agent of the broadcast receiving apparatus and transmits the collected information to the network management protocol via the network. The network management system for managing a management entity may be a broadcast transmitting terminal for transmitting contents, that is, a MSO. The network management system may receive the collected information from the broadcast receiving apparatuses and transmit a specific command to the broadcast receiving apparatus on the basis of the information. Hereinafter, a process of, at the MSO, obtaining the status information associated with the authentication of the POD and the broadcast receiving apparatus will be described.

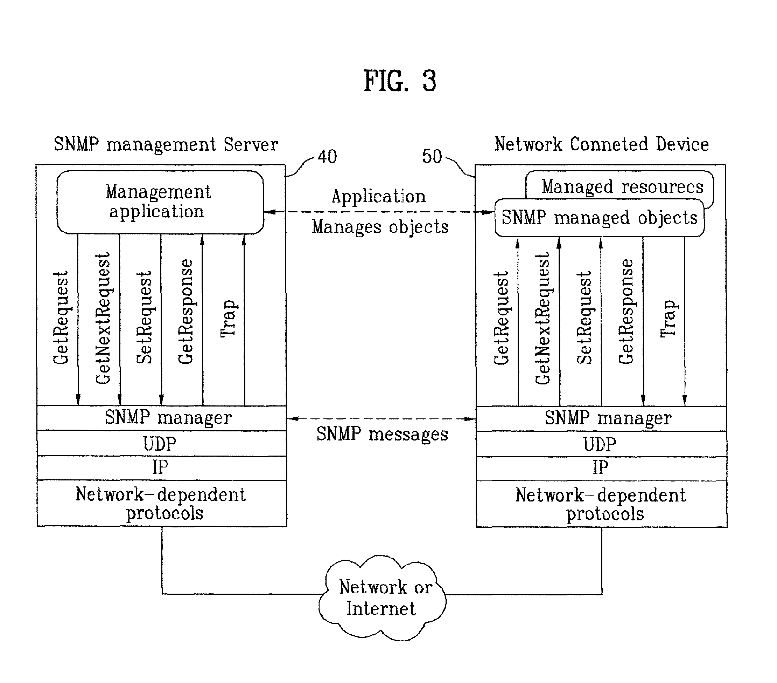

FIG. 3 is a conceptual diagram showing the transmission/reception of status information of a broadcast receiving apparatus using the SNMP.

Referring to FIG. 3, the SNMP can be used in all types of network environments using a transmission control protocol/Internet protocol (TCP/IP). A SNMP management server 40 may be connected to a network connected device 50 via a wired/wireless network. In Fig. 3, the SNMP management server 40 may be a broadcast transmitting terminal for transmitting a broadcast, that is, a MSO, and the network connected device may be a POD or a host device including a SNMP agent. Hereinafter, it is assumed that the network connected device is the broadcast receiving apparatus 50 which includes both the host device and the POD.

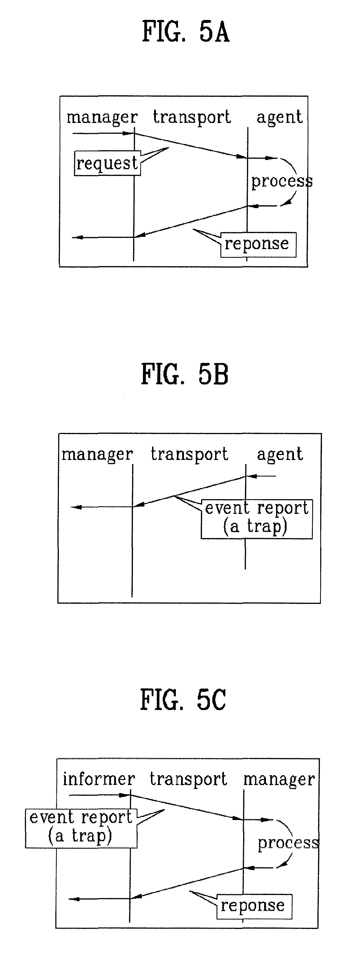

The SNMP management server 40 may request the status information of the broadcast receiving apparatus 50 using the SNMP manager and acquire the status information. At this time, a communication form such as "get" or "set" may be used in the request of the status information or the response of the status information. The detailed description of the communication form will be described in detail with reference to FIG. 5. The SNMP management server 40 changes the information transmitted/received between the SNMP managers by a protocol such as a user datagram protocol (UDP), a transmission control protocol (TCP) or an Internet protocol (IP) and transmits the information via network dependent protocols of a physical layer.

The broadcast receiving apparatus 50 may receive the request for the status information and transmit the status information according to a predetermined form. The network connected device 50 which transmits the status information to the SNMP management server 40 may transmit the status information by a standardized data structure called a management information base (MIB).

The broadcast receiving apparatus 50 may include a SNMP agent in order to transmit a variety of status information represented by the data structure to the remote SNMP management server 40. The SNMP agent collectively calls devices or applications which can interface the MIB data with a network protocol such as the UDP/IP. Although this embodiment is applicable to a bi-directional broadcast system, for example, a cable broadcast system will be described in order to facilitate the description of the embodiment.

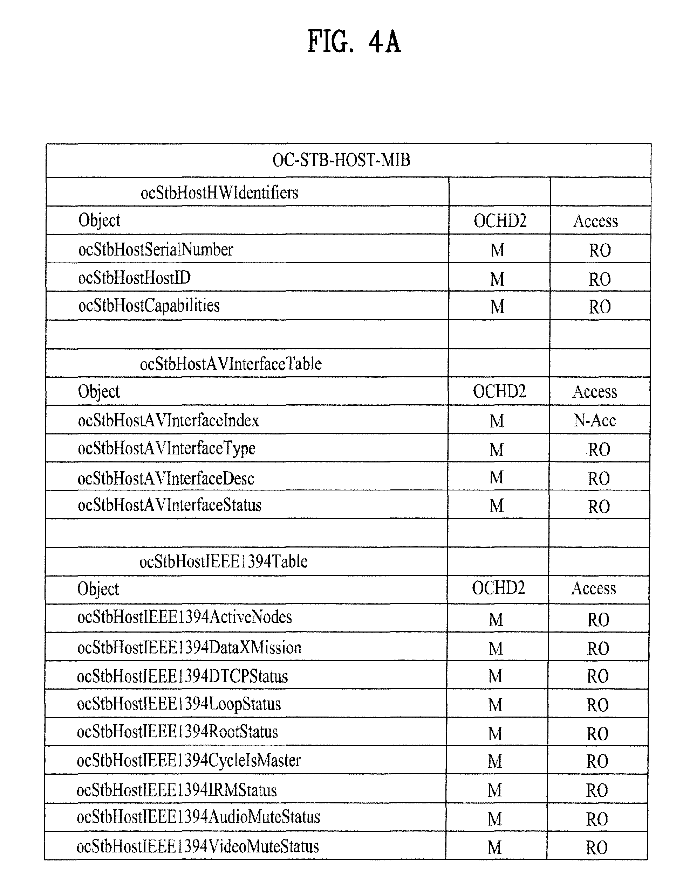

FIGs. 4A to 4E are views showing examples of a variety of status information which can be transmitted from a host device to a MSO using the SNMP.

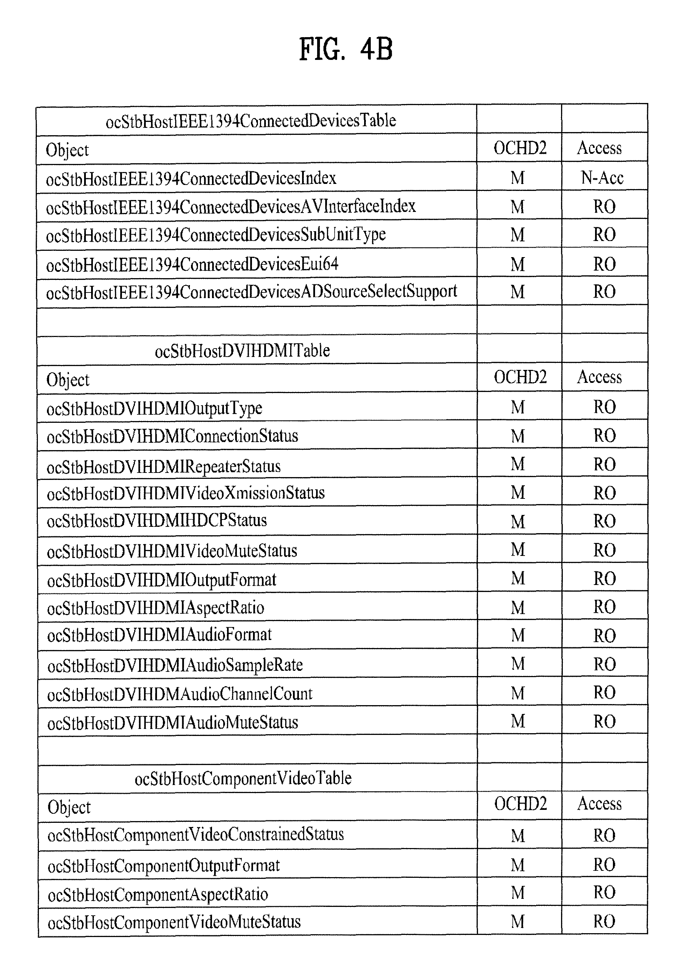

Referring to FIGs. 4A to 4E, the status information of the broadcast receiving apparatus 50 can be transmitted by the MIB data structure. FIGs. 4A to 4E show the information which can be defined by the MIB data, which is divided and shown in the drawings, for convenience of description. In the example of FIG. 4A, ocstbHostHWIdentifiers indicates the information on the identifier of the host device and ocstbHostAVInterfaceTable indicates interface information of the host device. In FIG. 4A, ocstbHostIEEE1394Table indicates information on the connection status when the host device is connected by the IEEE 1394 standard. In FIG. 4B, ocstbHostIEEE1394ConnectedDevicesTable indicates information on the device connected by the IEEE 1394 standard and ocstbHostDVIHDMITable includes the status information when the host device receives an input according to digital video interactive (DVI) or high definition multimedia interface (HDMI).

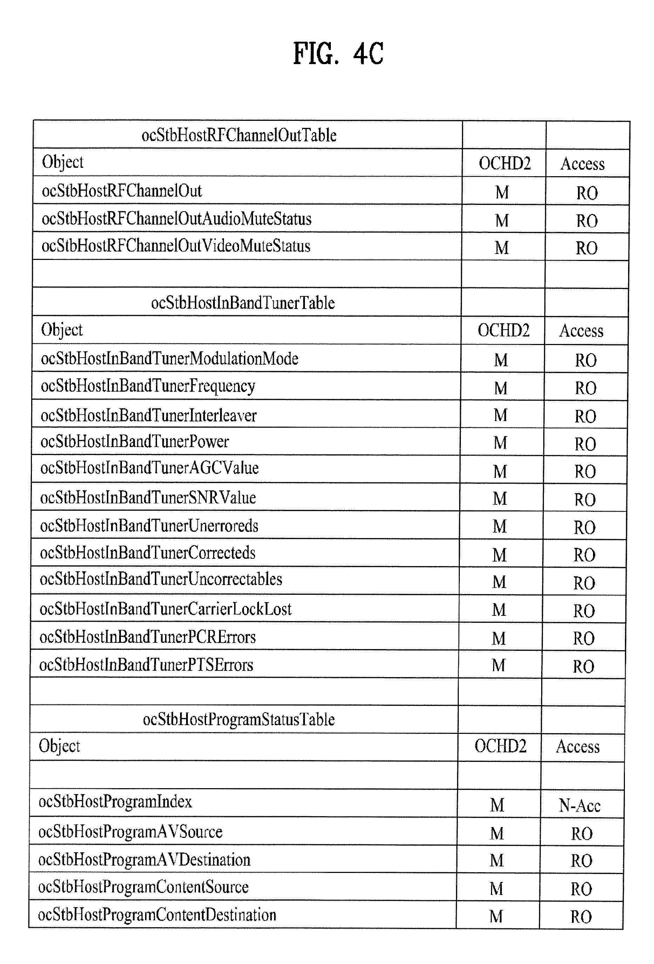

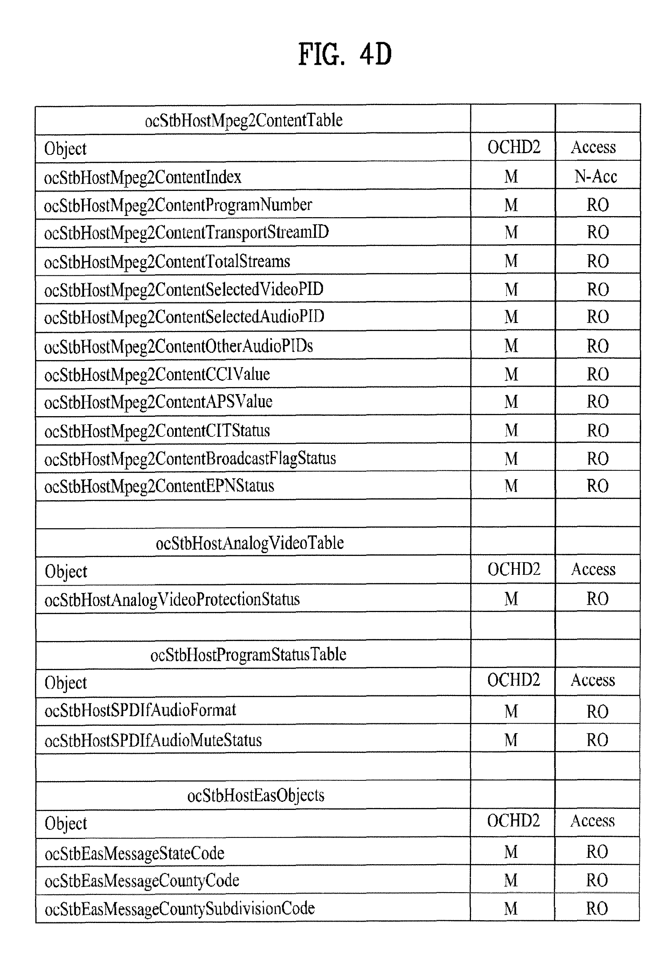

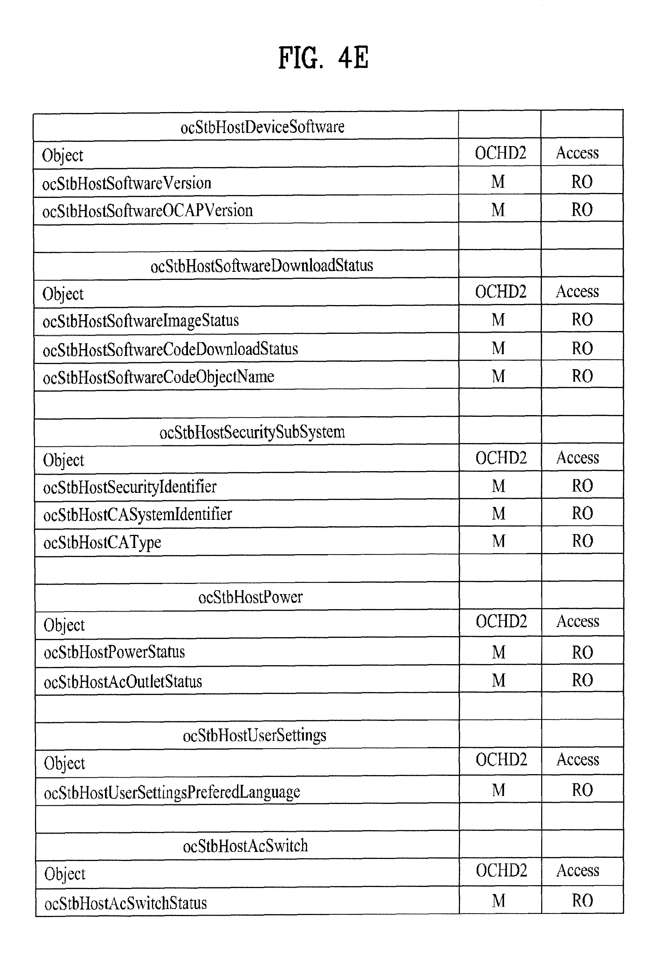

In FIG. 4C, ocstbHostRFChannelOutTable indicates information indicating whether the host device can output a RF signal, ocstbHostInBandTunerTable indicates information on a RF channel frequency of the tuner of the host device, and ocstbHostProgramStatusTable indicates information on input/output of a broadcast stream which is currently received. The object identifiers of FIGs. 4D and 4E may be examples of the status information related to the broadcast receiving apparatus and may be defined by the MIB data structure. In FIGs. 4A to 4E, M stands for mandatory and indicates a matter which is mandatorily defined in the standard related to the MIB data of the cable broadcast. RO indicates that the MSO has a right (read-only) which can read the status information of the broadcast receiving apparatus. N-Acc (not accessible) indicates that the MSO cannot access the status information.

The cable broadcast receiving apparatus may define the MIB data structure and transmit the above-described information to the MSO by a SNMP method. From the viewpoint of the description of the MIB data structure, the MSO serves as the SNMP management server and the host device of the broadcast receiving apparatus serves as the SNMP agent.

FIGs. 5A to 5C are conceptual diagrams of communication defined in the SNMP method.

Referring to FIGs. 5A to 5C, the concept that the SNMP management server and the SNMP agent exchange various object with each other may be classified to three concepts. FIG. 5A shows a first concept that the management server receives information from the agent. The management server may get the status information of the device via the agent (get operation) and set a specific value of the status information (set operation). If the management server requests specific information, the agent may determine whether the object is managed by the agent and respond thereto.

FIG. 5B shows a second concept that the management server communicates with the agent. When any event is generated in a device, the agent may report the status information of the event (trap operation). The management server may receive the status information of the event such that an adequate process is performed by the device which transmits the received status information.

The SNMP defines an informer, which is another object, in addition to the management server. FIG. 5C shows a third concept that the informer and the management server communicates with each other. The informer may report any event to the management server and the management server may transmit a response related to the event.

According to the above-described communication method according to the SNMP, if the host device includes the SNMP agent and defines the MIB data structure, the status information which is desired to be transmitted by the host device may be transmitted at a time point required by the management server. If a problem occurs in certificate information transmitted/received between the host device and the POD included in the broadcast receiving apparatus, the SNMP management server may receive it from the SNMP agent.

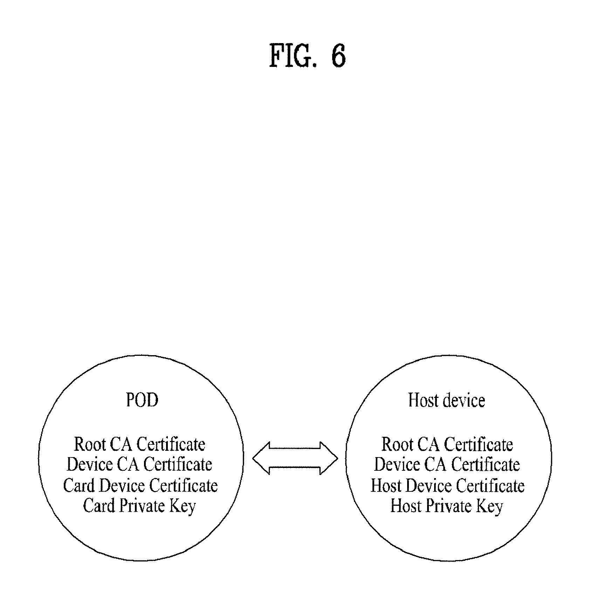

FIG. 6 is a view showing an example of transmitting/receiving certificate information between a Point Of Deployment (POD) including a security module and a host device.

Referring to FIG. 6, in order to facilitate the description of the certificate information, an example of transmitting/receiving a certificate based on a public key between the host device and the POD will be described.

The security module of the POD may include Root CA Certificate, Device CA Certificate, Card Device Certificate and Card Private Key. The host device may include Root CA Certificate, Device CA Certificate, Host Device Certificate and Host Private Key.

The host device stores the device certificate and the private key and exchanges digital signature data and the certificate with the POD when the host device is connected to the POD. Based on the exchanged data, the host device determines the validity of Card Device Certificate and verifies the digital signature data transmitted by the POD. As an algorithm used for mutual verification, a public key based algorithm such as a Diffid-Hellman algorithm, digital signature algorithm (DSA) or Rivest Shamir Adleman (RSA) algorithm may be used. A public key based algorithm uses a private key and a public key corresponding to the private key. The public key is generally distributed in a state of being included in Device Certificate.

In a public key enciphering method, data can be enciphered by a public key and a private key. A method of enciphering data by the private key and decoding the data by the public key can provide integrity and a method of enciphering data by the public key and decoding the data by the private key can provide confidentiality.

Any one, which enciphers data, of the host device and the security module generates a digital signature using its own private key. The generated digital signature is exchanged and decoded by the public key of the other of the host device and the security module, and is compared with an original. At this time, the data may be a broadcast signal, an enciphering key or a decoding key. The algorithm for enciphering the data by the private key and decoding the data by the public key provides integrity. Since the private key is not distributed, if the digital signature is decoded by the received public key, the data is enciphered by a transmitter for transmitting the public key with certainty and thus integrity is ensured.

In contrast, if the data is enciphered by the received public key and the enciphered data is distributed, the data can be decoded by only the private key of a receiver for receiving the data. Accordingly, since the data cannot be decoded by other devices, the confidentiality of the message is ensured.

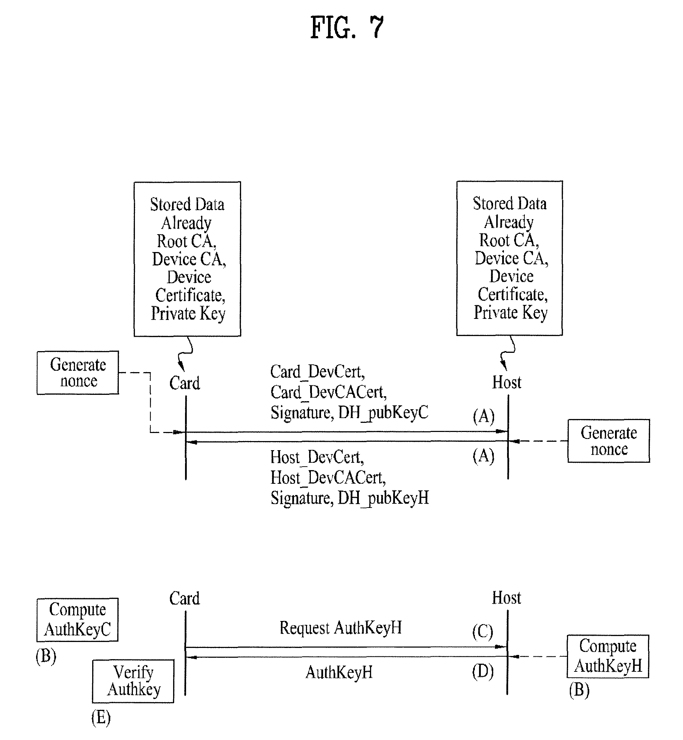

FIG. 7 is a view showing an example of a mutual authentication process between the host device and the POD.

Referring to FIG. 7, if the mutual authentication process between the POD and the host device is performed, the mutual authentication process may be divided into two steps. A first step is a step of exchanging Device Certificate between the POD and the host device and a second step is a mutual authentication step.

First, the step of exchanging Device Certificate will be described.

The POD has Stored Data Already, Root CA certificate, Device CA Certificate, Device Certificate and Card Private Key. A card transmits Card Device Certificate (Card_DevCert), Card CA Certificate (Card_DevCACert), a digital signature (Signature) generated by the public key and a public key (DH_pubKeyC) of the card generated by the Diffid-Hellman algorithm to the host device (A). The card generates and uses any data (nonce) before transmission.

In contrast, the host device stores Stored Data Already, Root CA Certificate, Device CA Certificate, Device Certificate and Private Key. Similar to the card, the host device transmits Host Device Certificate (Host_DevCert), Host Device CA Certificate (Host_DevCACert), a digital signature (Signature) generated by the public key, and a public key (DH_pubKeyC) of the host device generated by the Diffid-Hellman algorithm to the card (A).

The host device and the card perform the mutual authentication process using the exchanged certificates. First, the card computes a mutual authentication key (AuthKeyC) of the card on the basis of the information transmitted by the host device (B), and the host device computes a mutual authentication key (AuthKeyH) of the host device on the basis of the information transmitted by the card (B). The card requests the mutual authentication key of the host device to the host device (C) and receives the mutual authentication key from the host device (D). The card verifies whether the mutual authentication key of the host device is generated on the basis of the certificate, the signature and the public key transmitted by the card in the first step of exchanging the certificate (E).

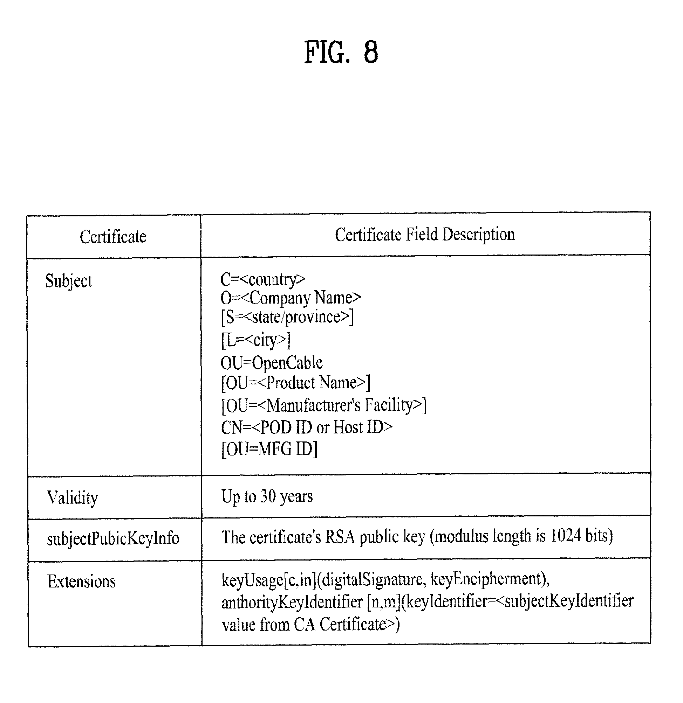

FIG. 8 is a view showing examples of fields included in a certificate.

Referring to FIG. 8, a digital certificate includes information necessary for an authentication process and a key generating process. In the example of FIG. 8, information on a product manufacturer or an identifier thereof is set in a subject field. The subject field may have the fields shown in FIG. 8. A C field may include a country to which a product using the certificate is applied, an O field may include a manufacturer for manufacturing the product, and an OU may include the field or standard of the product or the product manufacturer. For example, the C field may be Korea (KR), the O field may be LG Electronics Inc., and the OU field may be OpenCable. Alternatively, the identifier of the manufacturer for manufacturing the product may be set in the OU field ([OU=MFG ID]).

As optional fields, an S field (state or province) and an L field (city) may be set. Since the identifier of the product may be set in a CN field, the identifier of the POD or the host device may be included in the CN field.

A Validity field indicates the valid period of the certificate, for example, 30 years, as shown in FIG. 8. A subjectPublicKeyInfo field indicates the public key of the algorithm which can be used when the digital certificate is generated, that is, raw data of the public key according to the RSA algorithm having a length of 1024 bits as shown in FIG. 8.

An Extensions field is used for the test of the certificate and includes a keyUsage field indicating the usage range of the certificate or an authorityKeyIdentifier field in which the identifier of the issuer of the certificate is set.

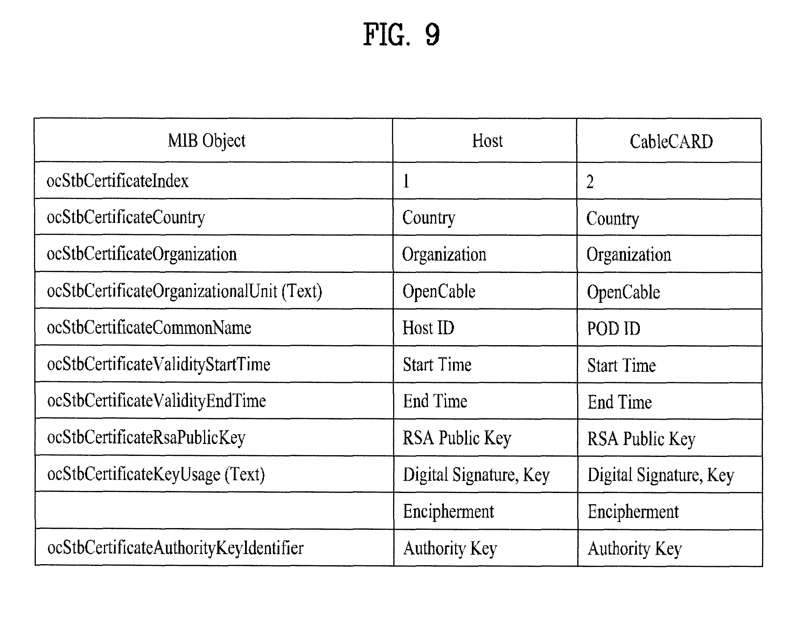

FIG. 9 is a view showing an exemplary embodiment of certificate status information in the form of a table.

Referring to Fig. 9, detailed information included in certificate status information may be defined by MIB objects and the certificate status information may be defined by a table including the MIB objects. That is, the fields of the table represent the MIB objects and indicate the detailed information included in the certificate status information. Accordingly, when the mutual authentication between the host device and the POD is performed, the host device may collect the values of the MIB objects included in the table, update the certificate status information and transmit the certificate status information to the MSO.

The table may include at least one of ocStbCertificateIndex, ocStbCertificateCountry, ocStbCertificateOrganization, ocStbCertificateOrganizationUnit, ocStbCertificateCommonName, ocStbCertificateValidityStartTime, ocStbCertificateValidityEndTime, ocStbCertificateRsaPublicKey, ocStbCertificateKeyUsage, and ocStbCertificateAuthorityKeyIdentifier, as items.

The ocStbCertificateIndex indicates the index for identifying the certificate object. In the example of FIG. 9, the host device has a value of "1" and the POD has a value of "2".

The ocStbCertificateCountry indicates the country to which the certificate is applied.

The ocStbCertificateOrganization indicates a product to which the certificate is applied, for example, the identifier of the product manufacturer of the POD or the host device.

The ocStbCertificateOrganizationUnit indicates the broadcast standard used by the product manufacturer. For example, OpenCable may be set in the case of a cable broadcast.

The ocStbCertificateCommonName indicates the value corresponding to the identifier of the product. In the example of FIG. 9, the host device identifier may be set with respect to the host device and the POD identifier may be set with respect to the POD.

The ocStbCertificateValidityStartTime indicates the start time of the valid period of the certificate.

The ocStbCertificateValidityEndTime indicates the end time of the valid period of the certificate.

The ocStbCertificateRsaPublicKey is a field in which the raw data of the enciphering key is set. For example, the raw data of the public key according to the RSA algorithm may be set.

The ocStbCertificateKeyUsage is a field in which the text data of the key usage of the certificate is set. The text data corresponding to the digital certificate and key encipherment may be set.

The ocStbCertificateAuthorityKeyIdentifier indicates the identifier of an issuer of the certificate.

Table 1 shows an example of the certificate status information of the host device by the MIB objects.

**Table 1**

| | |
|---|---|
| MIB Object | OCHD2 |
| ocStbCertificateIndex | 1 |
| ocStbCertificateCountry | KR |
| ocStbCertificateOrganization | LG Electronics Inc. |
| ocStbCertificateOrganizationalUnit | OpenCable |
| ocStbCertificateCommonName | 0A0000001E |
| ocStbCertificateValidityStartTime | 060502000000Z |
| ocStbCertificateValidityEndTime | 380501235959Z |
| ocStbCertificateRsaPublicKey | 308189028181009f9a6683bf6671194000f d504741fe6fbe01024fa4327001d8e6dc99 c5c898f24a907e35ded210a16d1ed3e6d6a ac35f0008509955ee04f5f3c1311640451 0245567aa00ffddd6c98fd96b66b1470c9b db6cf0149dd17391f4a98676a7545c62778 a503309973741bff9eebcec740be67cf8da 539670b722dff585c9822aa3f0203010001 |
| ocStbCertificateKeyUsage | Digital Signature, Key Encipherment |
| ocStbCertificateAuthorityKeyIdentifier | Ae53cac22de4496ee1bf1839d8d66357f7a |

The MSO may receive the MIB objects shown in Table 1 from the host device as the certificate status information and verify a certificate error between the host device and the POD on the basis of the received certificate status information. That is, if the certificate status information shown in Table 1 is transmitted to the MSO, the MSO verifies the MIB objects of Table 1. In Table 1, the MSO checks that the valid period of the certificate of the host device exceeds 30 years using ocStbCertificateValidityStartTime and ocStbCertificateValidityEndTime and verifies that the certificate error occurs due to the expiration of the valid period.

Table 2 shows another example of the certificate status information of the host device by the MIB objects.

**Table 2**

| | |
|---|---|
| MIB Object | OCHD2 |
| ocStbCertificateIndex | 1 |
| ocStbCertificateCountry | KR |
| ocStbCertificateOrganization | LG Electronics Inc. |
| ocStbCertificateOrganizationalUnit | OpenCable |
| ocStbCertificateCommonName | 0A00000002B |
| ocStbCertificateValidityStartTime | 060502000000Z |
| ocStbCertificateValidityEndTime | 360501235959Z |
| ocStbCertificateRsaPublicKey | 308189028181009f9a6683bf6671194000f d504741fe6fbe01024fa4327001d8e6dc99 c5c898f24a907e35ded210a16d1ed3e6d6a ac35f0008509955ee04f5f30c1311640451 0245567aa00ffddd6c98fd96b66b1470c9b db6cf0149dd17391f4a98676a7545c62778 a503309973741bff9eebcec740be67cf8da 539670b722dff585c9822aa3f0203010001 |
| ocStbCertificateKeyUsage | Digital Signature, Key Encipherment |
| ocStbCertificateAuthorityKeyIdentifier | Ae53cac22de4496ee1bf1839d8d66357f7a |

In Table 2, the MSO may check that the value of ocStbCertificateCommonName is 0A00000002B and the certificate common name (the serial number of the certificate of the host device) of the host device is 5.5 bytes greater than 5 bytes and verify that the certificate error occurs due to the excess of the value of ocStbCertificateCommonName.

Table 3 shows another example of the certificate status information of the host device by the MIB objects.

**Table 3**

| | |
|---|---|
| MIB Object | OCHD2 |
| ocStbCertificateIndex | 1 |
| ocStbCertificateCountry | KR |
| ocStbCertificateOrganization | LG Electronics Inc. |
| ocStbCertificateOrganizationalUnit | OpenCable |
| ocStbCertificateCommonName | 0A0000001E |
| ocStbCertificateValidityStartTime | 060502000000Z |
| ocStbCertificateValidityEndTime | 360501235959Z |
| ocStbCertificateRsaPublicKey | 308189028181009f9a6683bf6671194000f d504741fe6fbe01024fa4327001d8e6dc99 c5c898f24a907e35ded210a16d1ed3e6d6a ac35f0008509955ee04f5f30c1311640451 0245567aa00ffddd6c98fd96b66b1470c9b db6cf0149dd17391f4a98676a7545c62778 a503309973741bff9eebcec740be67cf8da 539670b722dff585c9822aa3f0203010001 |
| ocStbCertificateKeyUsage | Digital Signature, Key Encipherment |
| ocStbCertificateAuthorityKeyIdentifier | Ae53cac22de4496ee1bf1839d8d66357f7a d7412 |

In Table 3, the MSO may check that the value of ocStbCertificateAuthorityKeyIdentifier is Ae53cac22de4496ee1bf1839d8d66357f7ad7412 and the final value of the authority key of Device Certificate is not equal to that of ae53cac22de4496ee1bf1839d8d66357f7ad7411 which is the subject key of Device CA Certificate and verify that the certificate error occurs due to the error of the value of ocStbCertificateAuthorityKeyIdentifier.

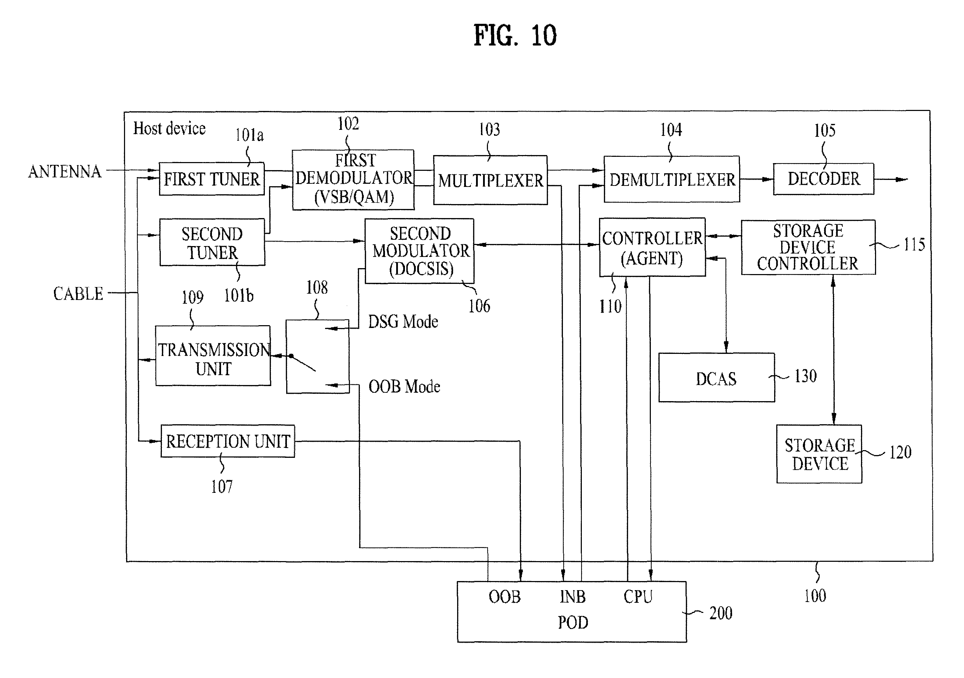

FIG. 10 is a view showing the configuration of a broadcast receiving apparatus according to an exemplary embodiment of the present invention.

The cable broadcast receiving apparatus according to the embodiment of the present invention will now be described with reference to FIG. 10.

If the broadcast receiving apparatus of the embodiment of the present invention is the cable broadcast receiving apparatus, the broadcast receiving apparatus may include a host device 100 and a POD 200 which is detachably mounted in the host device. In the embodiment of FIG. 10, the host device 100 may include a first tuner 101a, a second tuner 101b, a first demodulator 102, a multiplexer 103, a demultiplexer 104, a decoder 105, a second demodulator 106, a reception unit 107, a switch 108, a transmission unit 109, a controller 110, a storage device controller 115, and a storage device 120.

When the POD 200 is mounted in the host device 100, the mutual authentication process between the host device 100 and the POD is performed. The mutual authentication process is performed while the certificate is exchanged between the host device 100 and the POD 200. According to the process shown in FIG. 7, the device certificate exchanging step and the mutual authentication step are performed. The certificate transmitted/received in the mutual authentication process between the host device 100 and the POD 200 may include the information shown in FIG. 8. The controller 110 of the host device 100 may perform an agent function according to the network management protocol. In this case, the controller 110 may collect the certificate status information shown in FIG. 9, which is generated in the mutual authentication process between the host device 100 and the POD 200, and transmit the collected information to the management server of the network management protocol of the broadcast transmitting terminal.

As the network management protocol, the SNMP may be used. The certificate status information according to the mutual authentication process between the host device 100 and the POD 200 may have the table values as shown in FIG. 9 and may be transmitted to the management server of the network management protocol. When the controller 110 collects the certificate status information of the host device 100 or the POD 200, the certificate status information shown in FIG. 9 may be transmitted to the management server by the request of the management server or may be reported to the management server without the request of the management server.

The management server may access the host device 100 according to the network management protocol and receive the certificate status information of the host device 100 and the POD 200 from the controller 110 of the accessed host device. The management server may determine in which of the certificate status information shown in FIG. 9 a problem occurs on the basis of the received certificate status information and solve the problem generated in the authentication process according to the determined result. Accordingly, the certificate status information can be monitored and solved in real time.

In the example of FIG. 10, the host device may receive only the cable broadcast signal or at least one of a cable broadcast, a terrestrial broadcast or a satellite broadcast. That is, in the embodiment of FIG. 10, it is assumed that the host device 100 can receive at least one of the cable broadcast, the terrestrial broadcast or the satellite broadcast.

In FIG. 10, the cable broadcast receiving apparatus which can realize an out of band (OOB) mode and a data over cable service interface specifications (DOCSIS) settop gateway (DSG) mode as a bidirectional communication method between the cable broadcast receiving apparatus and the cable headend is shown. The host device can receive a broadcast or transmit information to the MSO by the above-described method.

The OOB mode is the transmission standard between the MSO and the settop box. In contrast, the DSG indicates the transmission method between a cable model control system of a cable broadcast station and a DOCSIS-based cable modem in the cable broadcast receiving apparatus.

The DOCSIS is the digital cable television standard employed by Cablelabs, which is the US-based cable broadcast standardization and certification institute. According to this standard, data can be transmitted using a cable modem.

Although the cable broadcast receiving apparatus using a combination of the OOB mode and the DSG mode is described in the embodiment of FIG. 10, this is only an exemplary embodiment of the present invention.

In the embodiment of FIG. 10, the host device 100 may include a first tuner 101a, a second tuner 101b, a first demodulator 102, a multiplexer 103, a demultiplexer 104, a decoder 105, a second demodulator 106, a reception unit 107, a switch 108, a transmission unit 109, a controller 110, a storage device controller 115, and a storage device 120.

The first tuner 101a may tune to a specific channel frequency of a terrestrial audio/video (A/V) broadcast transmitted via an antenna or a cable A/V broadcast transmitted in-band via a cable and output the tuned signal to the first demodulator 102.

The terrestrial broadcast and the cable broadcast may be different from each other in the transmission method. The first demodulator 102 may perform different demodulating processes with respect to signals which are modulated by different modulating methods. In the example of FIG. 10, if the terrestrial A/V broadcast is modulated by a vestigial sideband modulation (VSB) method and the cable A/V broadcast is modulated by a quadrature amplitude modulation (QAM) method, the first demodulator 102 demodulates the signal selected by the first tuner 101a by the VSB method or the QAM method.

The signals demodulated by the first demodulator 102 may be multiplexed by the multiplexer 103. The multiplexer 103 may output the cable broadcast to the POD 200 and output the terrestrial broadcast to the demultiplexer 104.

In the embodiment of FIG. 10, the POD 200 can process multiple streams. Accordingly, the POD 200 may enable the host device 100 to output the broadcast in which at least two streams are multiplexed.

The demultiplexer 104 receives the multiplexed broadcast signal, separates the broadcast signal into multiple streams, and outputs the multiple streams. The decoder 105 may decode the received broadcast signal and output a video/audio signal which can be recognized by a user.

The second tuner 101b may tune to a specific channel frequency of a data broadcast transmitted via the cable in the DSG mode and output the tuned signal to the second demodulator 106. The second demodulator 106 may demodulate the data broadcast of the DSG mode and output the demodulated broadcast signal to the controller 110.

A communication unit of the host device which transmits/receives data to/from the MSO may be implemented by the reception unit 107 and the transmission unit 109 of FIG. 10. The reception unit 107 tunes to a specific channel frequency with respect to the broadcast signal transmitted in the OOB mode via the cable and outputs the tuned signal to the POD 200.

If the bidirectional communication between the cable broadcast station and the cable broadcast receiving apparatus is possible, uplink information (e.g., pay program application, the status information of the storage device of the host device or the like) transmitted from the cable broadcast receiving apparatus to the cable broadcast station may be transmitted in the OOB mode or the DSG mode. Accordingly, the cable broadcast receiving apparatus according to the embodiment of the present invention may include the switch 108 in order to transmit the information by one of the modes.

The signal of the DSG mode is converted by the second demodulator 106 under the control of the controller 110 of the host device according to the network protocol, is selected by the switch 108, and is transmitted via the cable.

The signal of the OOB mode is sent to the transmission unit 109 via the POD 200 and is transmitted by the transmission unit via the cable. In the OOB mode, user information, system diagnostic information and certificate status information are output to the transmission unit 109 via the POD 200 and the switch 108, and the transmission unit 109 modulates the output signal by a quadrature phase-shift keying (QPSK) modulation method and transmits the modulated signal to the MSO via the cable.

If the broadcast-related information of the user and the certificate status information are transmitted in the DSG mode, the information is output to the transmission unit 109 via the controller 110 and the switch 108, is modulated by the transmission unit 109 by a QAM-16 modulation method, and is transmitted to the MSO via the cable.

The storage device 120 may record the received broadcast contents or applications. The storage device 120 of FIG. 10 may be any storage device having a digital video recorder (DVR) function, such as a time shift buffer, which is a volatile storage device, or a non-volatile storage device.

The storage device controller 115 may control the operation of the storage device 120.

The controller 110 may define the certificate status information by the MIB data. For example, the controller 110 may obtain the object of the certificate status information of the POD 200 and the host device 100, which is defined by the MIB. The controller 110 converts the information corresponding to the obtained object by the network management protocol and outputs the converted information to the MSO. The host device may convert the information defined by the MIB data by the SNMP method and output the converted information in order to transmit the information to the MSO.

At this time, the SNMP agent may be implemented by separate devices (not shown) and the controller 110 may function as the SNMP agent. That is, the controller may include the SNMP agent and an information management unit (not shown). The information management unit (not shown) collects the information associated with the certificate of the host device 100 and the information associated with the certificate of the POD 200 and updates the certificate status information on the basis of the collected information. If the certificate status information is defined in the form of the table shown in FIG. 9, the information management unit (not shown) may collect the values of the MIB objects included in the table, update the values of the MIB objects included in the table on the basis of the collected values, and update the certificate status information.

The SNMP agent may receive the request for the certificate status information via the reception unit 107 and control the certificate status information updated by the information management unit (not shown) to be transmitted via the transmission unit 109 when the request for the certificate status information is received. At this time, the SNMP agent may packetize object identifier data defined by the MIB data which is the certificate status information, convert the packetized object identifier data to the UDP/IP packets and output the UPD/IP packets. For example, the controller 110 may packetize the data corresponding to the defined object identifiers, convert the data into the UDP/IP packets and output the UPD/IP packets. The MSO may request the certificate status information by requesting the values of the object identifiers defined by the MIB.

A downloadable conditional access system (DCAS) 130 may receive and operate a cipher algorithm when the MSO transmits the cipher algorithm. In the embodiment of FIG. 10, the POD 200 may receive the multi-stream broadcast signal from the multiplexer 103 if the received broadcast is the terrestrial broadcast, and descramble the broadcast so as to normally reproduce or record the cable broadcast if the broadcast signal is scrambled.

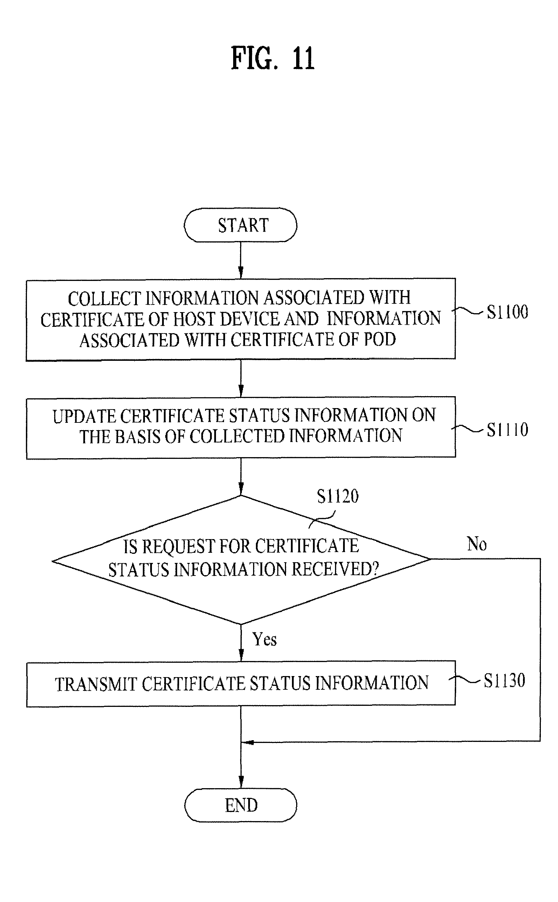

FIG. 11 is a flowchart illustrating a method of processing certificate status information according to an exemplary embodiment of the present invention.

Referring to FIG. 11, the controller 110 collects the information associated with the certificate of the host device and the information associated with the certificate of the POD (S1100). The certificate status information may be defined in the unit of MIB objects and may have table values as shown in FIG. 9. The certificate status information may include the values necessary for mutual authentication between the host device and the POD. If the certificate status information is defined in the unit of MIB objects, the controller 110 may collect the information in the unit of MIB objects.

The controller 110 updates the certificate status information on the basis of the collected information (S1100). The controller 110 may perform the step S1100 and the step S1110 in the mutual authentication process between the host device and the POD or repeatedly perform the step S1100 and the step S1110 in a predetermined period. Accordingly, the host device according to the present invention can provide newest certificate status information to the MSO in real time.

The controller 110 checks whether or not the request for the certificate status information is received (S1120). The controller 110 transmits the updated certificate status information to the MSO when the request for the certificate status information is received (S1130). The controller 110 may convert the collected certificate status information into the form indicated by the network management protocol and transmit the converted information. As the network management protocol, the SNMP may be used. That is, the controller 110 may transmit the certificate status information to the MSO on the basis of the SNMP.

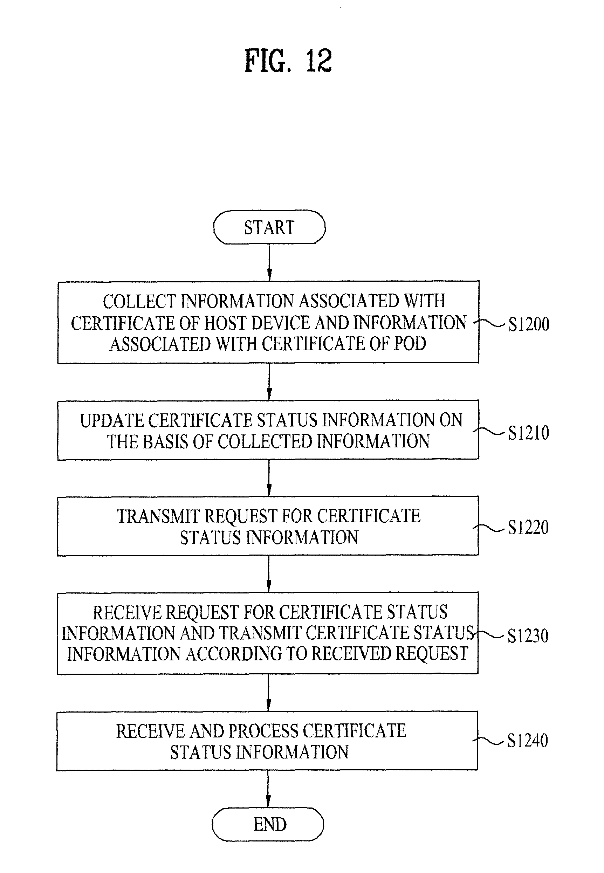

FIG. 12 is a flowchart illustrating a method of processing certificate status information according to another exemplary embodiment of the present invention.

Referring to FIG. 12, the host device collects the information associated with the information associated with the certificate of the host device and the information associated with the certificate of the POD (S1200). The host device may define the certificate status information in the unit of MIB objects and the certificate status information may have table values as shown in FIG. 9. The certificate status information may include the values necessary for the mutual authentication between the host device and the POD. If the certificate status information is defined in the unit of MIB objects, the host device may collect the information in the unit of MIB objects.

The host device updates the certificate status information on the basis of the collected information (S1210). The host device may perform the step S1200 and the step S1210 in the mutual authentication process between the host device and the POD or repeatedly perform the step S1200 and the step S1210 in a predetermined period. Accordingly, the host device according to the present invention can provide newest certificate status information to the MSO in real time.

The MSO transmits the request for the certificate status information to the host device (S1220). The MSO may request the certificate status information by the network management protocol. As an example of the network management protocol, the SNMP may be used. That is, the MSO may transmit the request for the certificate status information on the basis of the SNMP.

The host device receives the request for the certificate status information transmitted by the MSO and transmits the certificate status information according to the received request (S1230). The host device may convert the certificate status information into the form indicated by the network management protocol and transmit the converted information according to the network management protocol.

The MSO receives and processes the certificate status information transmitted by the host device (S1240). The MSO can verify the certificate error between the host device and the POD. That is, the host device can determine the problem in the authentication process between the host device and the POD from the certificate status information and can solve the problem which occurs in the authentication process.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A host device interfacing with a point of deployment (POD), the host device comprising:
a communication unit transmitting/receiving data via a network; and
a controller collecting information associated with a certificate of the host device and information associated with a certificate of the POD, updating certificate status information on the basis of the collected information, and transmitting the updated certificate status information via the communication unit when a request for the certificate status information is received via the communication unit.

2. The host device according to claim 1, wherein the certificate status information includes at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate.

3. The host device according to claim 1, wherein the certificate status information is defined by a management information base (MIB).

4. The host device according to claim 1, wherein the controller transmits the certificate status information on the basis of a simple network management protocol (SNMP).

5. The host device according to claim 4, wherein the controller includes:
an information management unit collecting the information associated with the certificate of the host device and the information associated with the certificate of the POD and updating the certificate status information on the basis of the collected information; and
a SNMP agent receiving the request for the certificate status information via the communication unit and transmitting the certificate status information via the communication unit when the request for the certificate status information is received.

6. The host device according to claim 1, further comprising:
a tuner receiving broadcast data;
a demodulator demodulating the received broadcast data; and
a multiplexer multiplexing the demodulated broadcast data and outputting the demultiplexed data to the POD.

7. A method of processing certificate status information, the method comprising:
transmitting a request for certificate status information including information associated with certificates of a host device and a point of deployment (POD) via a network;
at the host device, receiving the transmitted request for the certificate status information and transmitting the certificate status information according to the received request; and
receiving and processing the transmitted certificate status information.

8. The method according to claim 7, wherein the certificate status information includes at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate.

9. The method according to claim 7, wherein the certificate status information is defined by a management information base (MIB).

10. The method according to claim 7, wherein the transmitting of the request for the certificate status information includes transmitting the request for the certificate status information on the basis of a simple network management protocol (SNMP).

11. The method according to claim 7, wherein the processing of the certificate status information includes verifying a certificate error between the host device and the POD on the basis of the received certificate status information.

12. A method of processing certificate status information, the method comprising:
collecting information associated with a certificate of a host device and information associated with a certificate of a point of deployment (POD);
updating certificate status information on the basis of the collected information;
checking whether or not a request for the certificate status information is received; and
transmitting the updated certificate status information when the request for the certificate status information is received.

13. The method according to claim 12, wherein the certificate status information includes at least one of information on an identifier of an object of the certificate, information on a country to which the certificate is applied, information on an identifier of a manufacturer of a product to which the certificate is applied, information on an identifier of a broadcast standard associated with the product, information on an identifier of the product, information on a valid period of the certificate, information on raw data of an enciphering key of the certificate, information on key usage of the certificate and information on an identifier of an issuer of the certificate.

14. The method according to claim 12, wherein the certificate status information is defined by a management information base (MIB).

15. The method according to claim 12, wherein the transmitting of the certificate status information includes transmitting the certificate status information on the basis of a simple network management protocol (SNMP).
